# EUROPÄISCHE PATENTSCHRIFT

(11) **EP 0 477 879 B1**
(45) Veröffentlichungstag und Bekanntmachung des Hinweises auf die Patenterteilung: **19.01.1994**
(21) Anmeldenummer: 91116272.5
(22) Anmeldetag: 24.09.1991
(51) Int. Cl.: H01S 3/041, H01S 3/03

(54) **Für hohe Eingangsleistung geeigneter elektrisch gepumpter Gaslaser**
Electrically pumped gaslaser suitable for high input power
Laser à gaz pompé électriquement approprié pour une puissance d'entrée élevé

(30) Priorität: 26.09.1990 DE 4030442
(43) Veröffentlichungstag der Anmeldung: 01.04.1992
(73) Patentinhaber: SIEMENS AKTIENGESELLSCHAFT, 80333 München (DE)
(72) Erfinder: Günther, Wolfgang, Dipl.-Ing-, W-8000 München 83 (DE)

(56) Entgegenhaltungen:
- EP-A- 0 305 893
- US-A- 4 719 639
- OPTICS COMMUNICATIONS, Bd. 33, Nr. 3, Juni 1980, Seiten 307-310; O.R.WOOD: "A high power transversely excited CO2 waveguide laser"

## Beschreibung

Die vorliegende Erfindung betrifft einen für hohe Eingangsleistung geeigneten, elektrisch gepumpten Gaslaser gemäß dem Oberbegriff des Patentanspruchs 1. Ein derartiger Gaslaser ist aus der DE-OS 37 29 053 bekannt. Will man die Möglichkeiten der dort beschriebenen Laserart hinsichtlich der Leistung ausnutzen, so kommt man in Bereiche, in denen bekannte Vakuumdurchführungen bei den geforderten Abmessungen nicht mehr ausreichen, um auf Dauer vakuumdicht und ausreichend elektrisch spannungsfest zu bleiben. Beschädigungen des Lasers infolge der Erwärmung der Zuleitungen und der damit verbundenen lokalen Ausdehnung im Bereich der Durchführung führen zum Ausfall des Lasers.

Die Aufgabe, die der vorliegenden Erfindung zugrundeliegt, besteht in einem auch für den oberen Leistungsbereich geeigneten Aufbau eines Gaslasers nach dem Oberbegriff des Patentanspruchs 1. Diese Aufgabe wird durch die kennzeichnenden Merkmale des Patentanspruchs 1 gelöst. Wassergekühlte Durchführungen ermöglichen einen relativ einfachen Aufbau, bei dem das Rohr unmittelbar durch einen Isolator geführt wird, welcher seinerseits das Gehäuse vakuumdicht abschließt.

Dabei ist vorteilhaft, wenn eine nicht auf Massepotential liegende Elektrode über Kühlschlangen gekühlt ist und wenn die elektrische Zuleitung gleichzeitig eine Kühlmittelzu- oder -ableitung für diese Elektrode bildet und eine entsprechend aufgebaute Kühlmittelab- oder -zuleitung vorgesehen ist. Besonders geringe Verluste werden erreicht, indem die Kühlmittelzuleitung und die Kühlmittelableitung mit einer und derselben Spannungszuführung elektrisch leitend verbunden sind. Eine Verkleinerung des Aufbaus und die Einsparung einer Kühlmittelzuleitung ist ermöglicht, indem für zwei gegenpolige Elektroden nur eine gemeinsame Kühlmittelzuleitung und eine gemeinsame Kühlmittelableitung vorgesehen sind, indem die Kühlmittelzuleitung mit einer ersten, die Kühlmittelableitung mit einer zweiten gegenpoligen Elektrode elektrisch leitend verbunden ist, indem eine Verbindungsleitung für das Kühlmittel zwischen den beiden Elektroden angeordnet ist, indem im Bereich der Verbindungsleitung eine elektrisch isolierende Strecke vorgesehen ist und indem die Kühlmittelzuleitung oder die Kühlmittelableitung als elektrische Zuleitung dient.

Soll der Laser mit Hochfrequenz betrieben werden, so ist eine Ausführungsform vorteilhaft, in der das Gehäuse aus einem HF- und vakuumdichten Laserraum und einem HF-dichten Vorraum zusammengesetzt ist, indem die Kühlmittelzuleitung und die Kühlmittelableitung aus dem Laserraum in den Vorraum geführt sind, indem die zu der gegenüber Masse spannungsführenden Elektrode gehörigen Kühlmittelzu- bzw. Kühlmittelableitung im Vorraum mit einer Zuleitung für die Hochfrequenz elektrisch leitend verbunden ist und indem das Kühlmittel der Kühlmittelab- und der Kühlmittelzuleitung über im Vorraum befindliche elektrisch isolierende und zur Vermeidung von elektrischen Durchschlägen ausreichend lang dimensionierte Kühlmittelleitungen zugeführt wird.

Dieser Aufbau ermöglicht eine hochfrequenzdichte Zuführung von Kühlmittel und elektrischer Energie. Alle Schwachstellen in Bezug auf Hochfrequenzdichtigkeit liegen im Vorraum gut geschützt.

Vorteilhaft ist eine Anpaßeinheit im Vorraum untergebracht, welche die Impedanz einer äußeren HF-Leitung bzw. eines HF-Generators an die Impedanz des Lasers anpaßt. Dadurch werden weitere Möglichkeiten der Abstrahlung von Hochfrequenz ausgeschaltet.

Als Kühlmittel bewährt sich insbesondere Wasser, welches sich als ausreichend isolierend herausgestellt hat.

Eine besonders vorteilhafte HF-Isolation ist gegeben, indem die elektrisch nicht leitenden Kühlmittelleitungen zur Vermeidung von elektrischen Durchschlägen ausreichend lang und noch im Vorraum mit elektrisch leitenden Kühlmittelanschlüssen verbunden sind und indem die Kühlmittelanschlüsse auf Masse liegen und aus dem Vorraum herausführen. Dabei ist es vorteilhaft, wenn der Vorraum Metallwände besitzt, wenn die Kühlmittelanschlüsse aus Metallrohren gebildet sind, die durch eine Metallwand hindurchlaufen und mit dieser verlötet oder verschweißt sind.

Eine vorteilhafte Ausführungsform weist die Merkmale auf, daß der Laserraum allseitig von Metallwänden begrenzt ist und eine Stirnwand besitzt, in der eine Öffnung angebracht ist, daß in diese Öffnung ein Metallrohr mit einem im Vergleich zu den Kühlmittelzuleitungen größeren Innendurchmesser eingesetzt ist, daß dieses Metallrohr in den Vorraum hineinragt und dort mit einer Keramikscheibe vakuumdicht verschlossen ist, durch die die Kühlmittelzu- und -ableitung verlaufen und daß die Keramikscheibe als Isolator für die vorgesehene HF-Spannung ausgelegt ist. Dabei ist zur Vermeidung von thermischen Spannungen vorteilhaft die an HF liegende Kühlmittelzu- bzw. -ableitung zumindest im Bereich der Keramikscheibe aus dünnwandigem Metallrohr gebildet und im Vorraum nahe an der Keramikscheibe über eine Klemmeinrichtung mit einer Zuleitung für die Hochfrequenz elektrisch leitend verbunden, wobei die Zuleitung für die Hochfrequenz von der Klemmeinrichtung abgestützt wird und zur Impedanzanpaßeinheit führt. Der erfindungsgemäße Laser ist vorteilhaft ein Slab- oder Bandleiterlaser mit einem instabilen optischen Resonator. Solche Laser sollen hohe Leistungen mit kleinen Abmessungen verbinden, die Probleme der Leistungszufuhr treten dort deutlich in Erscheinung.

Die Erfindung wird nun anhand von vier Figuren näher erläutert. Sie ist nicht auf die in den Figuren gezeigte Beispiel beschränkt.
- FIG 1 und 3: zeigen erfindungsgemäße Laser in teilweise geschnittener und gebrochener Ansicht,
- FIG 2 und 4: zeigen Schnitte durch die Laser der FIG 1 bzw. 3.

Ein Gehäuse eines elektrisch gepumpten Gaslasers setzt sich aus einem Laserraum 1 und einem Vorraum 2 zusammen. Der Laserraum 1 ist allseitig von Metallwänden begrenzt. Auf eine Außenwand 3 ist eine Stirnwand 4 aufgesetzt. Die Stirnwand 4 enthält zwei Ausnehmungen 5, in die Durchführungsrohre 6 aus Metall eingesetzt sind. Die Durchführungsrohre 6 ragen in den Vorraum 2 hinein und sind außerhalb der Stirnwand 4 durch je eine Keramikscheibe 7 abgeschlossen. Die Keramikscheibe 7 wird von einem Rohrstück 10 der Kühlmittelzu- bzw. -ableitung 8 bzw. 9 durchlaufen, wobei das Rohrstück 10 in einen Rohrbogen 11 übergeht, welcher in ein Verbindungsstück 12 einer isoliert vom Gehäuse angeordneten Elektrode 13 einmündet. Die Elektrode 13 ist über isolierende Abstandsstücke 14 mit einer Elektrode 15 verbunden, welche auf Massepotential liegt.

Die Rohrstücke 10 sind in einer gemeinsamen elektrisch leitenden Klemmeinrichtung 16 festgeklemmt. Die Klemmeinrichtung 16 ist mit einer HF-Zuleitung 17 elektrisch leitend verbunden, wobei die HF-zuleitung 17 zu einer Anpaßeinheit 18 führt.

Die Kühlmittelzuleitung 8 und die Kühlmittelableitung 9 sind über elektrisch isolierende Kühlmittelleitungen 19 mit Kühlmittelanschlüssen 20 verbunden, wobei die Länge der Kühlmittelleitungen 19 zur Verhinderung von Durchschlägen der Hochfrequenz ausreichend lang dimensioniert sind und beispielsweise in einem Bogen verlaufen. Erfahrungsgemäß reicht hierzu eine Länge von etwa 10cm aus. Die Kühlmittelanschlüsse 20 verlaufen durch die Anpaßeinheit 18 und sind mit der Stirnwand 21 des Vorraumes 2 verlötet oder verschweißt, durch die Stirnwand 22 der Anpaßeinheit 18 hindurchgeführt. Diese Anordnung gewährleistet eine sichere Abschirmung von Hochfrequenz bei geringem Aufwand.

Die Kühlmittelzu- und -ableitung für die auf Masse liegende Elektrode 15 können als Metallrohre ausgeführt und ebenfalls durch die Anpaßeinheit und die Stirnwand des Vorraumes hindurch nach außen geführt sein.

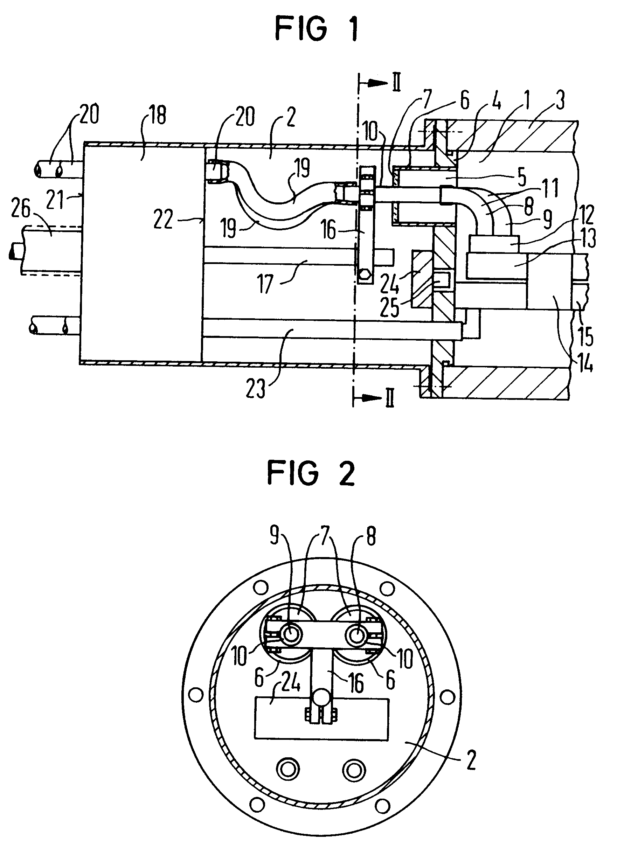

Der Vorraum 2 braucht nur hochfrequenzdicht abgeschlossen zu sein, ein vakuumdichtes Gehäuse ist nicht erforderlich. Dem entgegen ist der Laserraum 1 vakuumdicht gestaltet. Dabei ermöglicht der erfindungsgemäße Aufbau die Verwendung von Aluminium für die Wände des Laserraumes. Das Durchführungsrohr 6 besteht vorteilhaft aus einem an den Temperaturausdehnungskoeffizienten der Keramikscheibe 7 angepaßten Metall, beispielsweise "Vacon". Das Durchführungsrohr 6 ist dabei relativ dünnwandig gestaltet, so daß es bei mechanischen Spannungen infolge von Temperaturänderungen sich verformt und somit die vakuumdichte Verbindung zwischen den genannten Stoffen mit unterschiedlichem Temperaturausdehnungskoeffizienten gewährleistet. Spiegelhalterungen 24 mit Laserspiegeln 25, von denen in FIG 1 nur einer gezeichnet ist, ergänzen den Laser. Eine Hochfrequenz-Zuleitung 26 in Form eines abgeschirmten Kabels ist im Bereich seiner Stirnwand angeschlossen.

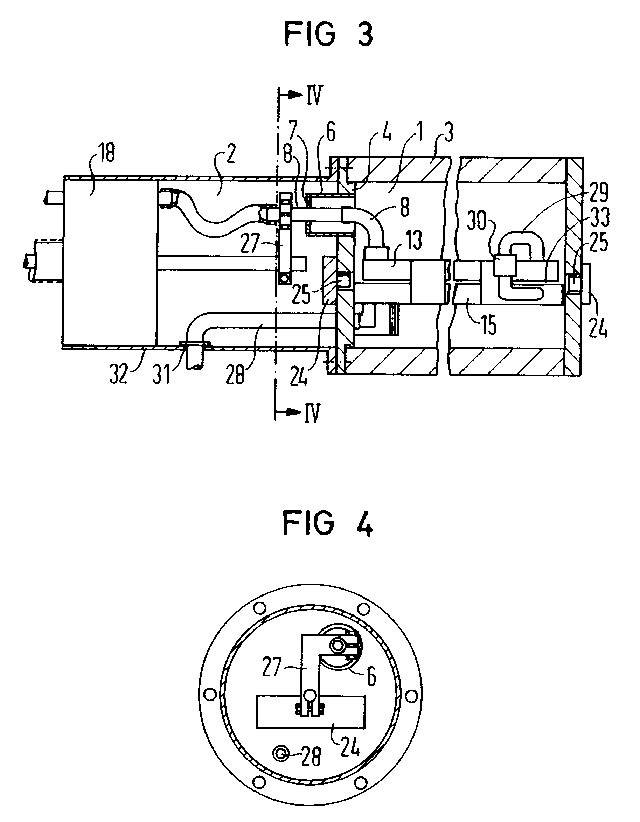

Im Beispiel der FIG 3 und 4 ist nur eine Kühlmittelzuleitung 8 und eine Kühlmittelableitung 28 vorgesehen, wobei die Kühlmittelzuleitung gleichzeitig als Zuführung für die Hochfrequenz dient. Demgemäß ist die zur HF-Zuführung dienende Klemmeinrichtung 27 winkelförmig ausgeführt, die T-förmige Ausführung der FIG 1 ist nicht erforderlich. Das Kühlmittel durchläuft nicht dargestellte Kühlkanäle der gegenüber Masse isoliert aufgebauten Elektrode 13 und fließt dann durch eine Verbindungsleitung 29, welche eine Isolierstrecke 30 enthält, in die an Masse liegende Elektrode 15 und wird über eine Kühlmittelableitung 28 nach außen geführt. Die Kühlmittelableitung 28 ist mit der Stirnwand 4 des Laserraumes 1 vakuumdicht verbunden und schließt den Vorraum 2 an einer Durchtrittsstelle 31 nur HF-dicht ab. Die Durchtrittsstelle 31 ist in diesem Beispiel in den Zylindermantel 32 des Vorraumes 2 verlegt. Sie kann auch wie beim Beispiel der FIG 1 durch die Anpaßeinheit 18 hindurch verlaufen. Lasersspiegel 25 sind möglichst nahe an den Entladungsspalt 33 des hier dargestellten Bandleiterlasers herangeführt. Sie sitzen im wesentlichen in der Gehäusewand und ermöglichen daher eine kleine Dimensionierung des Laserraumes.

## Patentansprüche

1. Für hohe Eingangsleistung geeigneter elektrisch gepumpter Gaslaser mit einem Gehäuse, das einen vakuumdichten Laserraum (1) beinhält und zwei Elektroden (13,15), von denen zumindest eine (13) gegenüber dem Gehäuse elektrisch isoliert ist, wobei zur Zuführung von elektrischer Energie eine Zuleitung vorgesehen ist, wobei diese Zuleitung elektrisch isoliert und vakuumdicht durch die Laserraumwand geführt ist, **dadurch** **gekennzeichnet,** daß die Zuleitung als Rohr ausgebildet ist, daß die Isolation gegenüber dem Gehäuse durch eine isolierende Durchführung (7) für dieses Rohr gebildet ist und daß das Rohr von Kühlmittel durchflossen ist.

2. Gaslaser nach Anspruch 1, **dadurch gekennzeichnet**, daß die gegenüber dem Gehäuse isolierte Elektrode (13) über Kühlkanäle gekühlt ist und daß die elektrische Zuleitung (8,10) gleichzeitig eine Kühlmittelzuleitung (8) für diese Elektrode bildet und daß eine entsprechend aufgebaute Külmittelableitung (9,28) vorgesehen ist.

3. Gaslaser nach Anspruch 2, **dadurch gekennzeichnet**, daß die Kühlmittelzuleitung (8) und die Kühlmittelableitung (9) mit derselben Spannungszuführung (17) elektrisch leitend verbunden sind.

4. Gaslaser nach Anspruch 2, **dadurch gekennzeichnet**, daß für zwei gegenpolige Elektroden (13,15) nur eine gemeinsame Kühlmittelzuleitung (8) und eine gemeinsame Kühlmittelableitung (28) vorgesehen sind, daß die Kühlmittelzuleitung mit einer ersten (13), die Kühlmittelableitung aber mit einer zweiten Elektrode (15) elektrisch leitend verbunden ist, daß eine Verbindungsleitung (23) für das Kühlmittel zwischen den beiden Elektroden angeordnet ist, daß im Bereich der Verbindungsleitung eine elektrisch isolierende Strecke (30) vorgesehen ist und daß die Kühlmittelzuleitung oder die Kühlmittelableitung als elektrische Zuleitung dient.

5. Gaslaser nach einem der Ansprüche 2 bis 4, **dadurch** **gekennzeichnet,** daß das Gehäuse aus einem hochfrequenz- und vakuumdichten Laserraum (1) und einem in Richtung des Laserstrahles vorgelagerten hochfrequenzdichten Vorraum (2) zusammmengesetzt ist, daß die Kühlmittelzuleitungen (8,10) und die Kühlmittelableitungen (9,28) aus dem Laserraum in den Vorraum herausgeführt sind und daß die gegenüber Masse Spannung führenden Kühlmittelzu (8,10)- bzw. -ableitungen (9) im Vorraum mit einem entsprechenden elektrischen Anschluß (17) verbunden sind, zur Kühlmittelzu- bzw. -abfuhr aber noch im Vorraum elektrisch isolierende Kühlmittelleitungen (19) an die Kühlmittelzu- bzw. -ableitung anschließen.

6. Gaslaser nach Anspruch 5, **dadurch gekennzeichnet**, daß im Vorraum eine Anpaßeinheit (18) untergebracht ist, welche die Impedanz einer äußeren Hochfrequenzleitung bzw. eines HF-Generators an Impedanz des Lasers anpaßt.

7. Gaslaser nach einem der Ansprüche 1 bis 6, **dadurch** **gekennzeichnet,** daß als Kühlmittel Wasser dient.

8. Gaslaser nach einem der Ansprüche 5 bis 7, **dadurch** **gekennzeichnet,** daß die elektrisch nicht leitenden Kühlmittelleitungen (19) zur Vermeidung von elektrischen Durchschlägen ausreichend lang und noch im Vorraum mit elektrisch leitenden Kühlmittelanschlüssen (20) verbunden sind, daß die Kühlmittelanschlüsse auf Masse liegen und aus dem Vorraum herausführen.

9. Gaslaser nach Anspruch 8, **dadurch gekennzeichnet**, daß der Vorraum eine Metallwand (21) besitzt, daß die Kühlmittelanschlüsse (20) aus Metallrohren gebildet sind, durch die Metallwand hindurchlaufen und mit dieser verlötet oder verschweißt sind.

10. Gaslaser nach einem der Ansprüche 1 bis 9, **dadurch** **gekennzeichnet,** daß der Laserraum allseitig von Metallwänden begrenzt ist und eine Stirnwand (4) besitzt, in die mindestens eine Ausnehmung (5) eingebracht ist, daß in diese Ausnehmung zumindest ein Durchführungsrohr aus Metall (6) mit einem im Vergleich zu den Kühlmittelleitungen größeren Innendurchmesser eingesetzt ist, daß dieses Durchführungsrohr in den Vorraum hineinragt und dort mit einer Keramikscheibe (7) vakuumdicht verschlossen ist, durch die zumindest eine Kühlmittelzu- und/oder -ableitung (8,10) verläuft und daß die Keramikscheibe als Isolator für die vorgesehene HF-Spannung ausgelegt ist.

11. Gaslaser nach Anspruch 10, **dadurch gekennzeichnet**, daß die an Hochfrequenz liegende Kühlmittelzu- und -ableitung zumindest im Bereich der Keramikscheibe aus dünnwandigem Metallrohr gebildet ist und im Vorraum in der Nähe der Keramikscheibe über eine Klemmeinrichtung (16) mit einer Zuleitung für die Hochfrequenz elektrisch leitend verbunden ist, daß die Klemmeinrichtung die Zuleitung für HF abstützt und daß die Zuleitung für die Hochfrequenz zu einer Anpaßeinheit für die Impedanz führt.

12. Gaslaser nach Anspruch 6, **dadurch gekennzeichnet**, daß die Anpaßeinheit durch eine Metallwand (22) vom übrigen Vorraum abgetrennt ist und daß die Kühlmittelanschlüsse durch diese Metallwand hochfrequenzdicht geführt sind.

13. Gaslaser nach einem der Ansprüche 1 bis 12, **dadurch** **gekennzeichnet,** daß der Laser ein Slab- oder Bandleiterlaser mit einem instabilen optischen Resonator ist.

## Claims

1. Electrically pumped gas laser suitable for high input power, comprising a housing which contains a vacuum-tight laser space (1) and two electrodes (13, 15), at least one of which (13) is electrically insulated from the housing, a feed line being provided for supplying electrical energy, this feed line being conducted through the wall of the laser space in an electrically insulated and vacuum tight manner, characterized in that the feed line is constructed as a tube, in that the insulation from the housing is formed by an insulating bushing (7) for this tube and in that coolant flows through the tube.

2. Gas laser according to Claim 1, characterized in that the electrode (13) insulated from the housing is cooled by cooling ducts, and in that the electrical feed line (8, 10) at the same time forms a coolant feed line (8) for this electrode, and in that a correspondingly constructed coolant discharge line (9, 28) is provided.

3. Gas laser according to Claim 2, characterized in that the coolant feed line (8) and the coolant discharge line (9) are electrically conductively connected to the same voltage supply (17).

4. Gas laser according to Claim 2, characterized in that only one common coolant feed line (8) and one common coolant discharge line (28) are provided for two electrodes (13, 15) of opposite polarity, in that the coolant feed line is electrically conductively connected to a first electrode (13) but the coolant discharge line is electrically conductively connected to a second electrode (15), in that a connecting line (23) for the coolant is arranged between the two electrodes, in that an electrically insulating distance (30) is provided in the area of the connecting line, and in that the coolant feed line or the coolant discharge line serves as electrical feed line.

5. Gas laser according to one of Claims 2 to 4, characterized in that the housing is assembled from a radio-frequency- and vacuum-tight laser space (1) and a radio-frequency-tight antechamber (2) located upstream in the direction of the laser beam, in that the coolant feed lines (8, 10) and the coolant discharge lines (9, 28) are brought out of the laser space into the antechamber, and in that the coolant feed lines (8, 10) and discharge lines (9) carrying voltage with respect to earth are connected to a corresponding electrical terminal (17) in the antechamber, but electrically insulating coolant lines (19) are also connected in the antechamber to the coolant supply line and discharge line for the purpose of coolant supply and removal.

6. Gas laser according to Claim 5, characterized in that a matching unit (18) is accommodated in the antechamber, which matches the impedance of an external radio-frequency line or of an RF generator to the impedance of the laser.

7. Gas laser according to one of Claims 1 to 6, characterized in that water is used as coolant.

8. Gas laser according to one of Claims 5 to 7, characterized in that, in order to prevent electrical flushovers, the electrically non-conductive coolant lines (19) are sufficiently long and are still connected to electrically conductive coolant connections (20) in the antechamber, in that the coolant connections are connected to earth and lead out of the antechamber.

9. Gas laser according to Claim 8, characterized in that the antechamber has a metal wall (21), and that the coolant connections (20) are formed of metal tubes, pass through the metal wall and are soldered or welded to the latter.

10. Gas laser according to one of Claims 1 to 9, characterized in that the laser space is bounded on all sides by metal walls and has an end wall (4) in which at least one recess (5) is formed, in that at least one bushing tube of metal (6), with an inside diameter which is greater in comparison with the coolant lines, is inserted into this recess, in that this bushing tube protrudes into the antechamber and is there sealed in a vacuum-tight manner with a ceramic disc (7), through which at least one coolant feed line and/or discharge line (8, 10) extends, and in that the ceramic disc is designed as insulator for the planned RF voltage.

11. Gas laser according to Claim 10, characterized in that the coolant feed and discharge line connected to radio frequency is formed of thin-walled metal tube at least in the area of the ceramic disc and is electrically conductively connected in the antechamber, in the vicinity of the ceramic disc, to a feed line for the radio frequency via a clamping device (16), in that the clamping device supports the feed line for RF, and in that the feed line for the radio frequency leads to a matching unit for the impedance.

12. Gas laser according to Claim 6, characterized in that the matching unit is separated from the remaining antechamber by a metal wall (22), and in that the coolant connections are conducted in a radio-frequency-tight manner through this metal wall.

13. Gas laser according to one of Claims 1 to 12, characterized in that the laser is a slab- or microstrip laser with an unstable optical resonator.

## Revendications

1. Laser à gaz à pompage électrique, approprié pour une puissance d'entrée élevée, comportant un boîtier qui présente une chambre (1) étanche au vide pour le laser et deux électrodes (13,15), dont au moins l'une (13) est isolée électriquement par rapport au boîtier, et dans lequel une ligne d'alimentation est prévue pour l'alimentation en énergie électrique, cette ligne d'alimentation traversant d'une manière électriquement isolée et étanche au vide la paroi de la chambre du laser, caractérisé par le fait que la ligne d'alimentation est réalisée sous la forme d'un tube, que l'isolation par rapport au boîtier est formée par une traversée isolante (7) pour ce tube et que le tube est parcouru par un fluide de refroidissement.

2. Laser à gaz suivant la revendication 1, caractérisé par le fait que l'électrode (13) isolée par rapport au boîtier est refroidie par l'intermédiaire de canaux de refroidissement et que la ligne d'alimentation électrique (8,10) forme simultanément une canalisation (8) d'amenée du fluide de refroidissement pour cette électrode et qu'il est prévu une canalisation (9,28) d'évacuation du fluide de refroidissement, agencée de façon correspondante.

3. Laser à gaz suivant la revendication 2, caractérisé par le fait que la canalisation (8) d'amenée du fluide de refroidissement et la canalisation (9) d'évacuation du liquide de refroidissement sont raccordées d'une manière électriquement conductrice au même élément d'application de tension (17).

4. Laser à gaz suivant la revendication 2, caractérisé par le fait que pour deux électrodes (13,15) possédant des polarités opposées, il n'est prévu qu'une canalisation commune (8) d'amenée du fluide de refroidissement et qu'une canalisation commune (28) d'évacuation du liquide de refroidissement, que la canalisation d'amenée du fluide de refroidissement est reliée d'une manière électriquement conductrice à une première électrode (13), mais que la canalisation d'évacuation du fluide de refroidissement est raccordée d'une manière électriquement conductrice à la seconde électrode (15), qu'une canalisation de raccordement (29) pour le fluide de refroidissement est disposée entre les deux électrodes, qu'une section électriquement isolante (30) est prévue dans la zone de la canalisation de raccordement et que la canalisation d'amenée du fluide de refroidissement et la canalisation d'évacuation du fluide de refroidissement est utilisée en tant que ligne d'alimentation électrique.

5. Laser à gaz suivant l'une des revendications 2 à 4, caractérisé par le fait que le boîtier est constitué par la réunion d'une chambre (1) pour le laser, étanche aux hautes fréquences et au vide, et par une chambre amont (2) disposée en amont dans la direction du faisceau laser et étanche aux hautes fréquences, que les canalisations (8,10) d'amenée du fluide de refroidissement et les canalisations (9,28) d'évacuation du fluide de refroidissement sont ressorties hors de la chambre du laser, dans la chambre amont et que les canalisations (8,10) d'amenée du fluide de refroidissement et la canalisation (9) d'évacuation du fluide de refroidissement, qui appliquent une tension par rapport à la masse, sont raccordées, dans la chambre amont, à une borne électrique correspondante (17), mais que pour l'amenée et l'évacuation du fluide de refroidissement, des canalisations (19) pour le fluide de refroidissement, qui réalisent encore une isolation électrique dans la chambre amont, se raccordent à la canalisation d'amenée et à la canalisation d'évacuation du fluide de refroidissement.

6. Laser à gaz suivant la revendication 5, caractérisé par le fait que dans la chambre amont est disposée une unité d'adaptation (18), qui adapte l'impédance d'une ligne extérieure à haute fréquence d'un générateur à haute fréquence à l'impédance du laser.

7. Laser à gaz suivant l'une des revendications 1 à 6, caractérisé par le fait qu'on utilise de l'eau comme fluide de refroidissement.

8. Laser à gaz suivant l'une des revendications 5 à 7, caractérisé par le fait que les canalisations (19) pour le fluide de refroidissement, qui ne sont pas électriquement conductrices, sont raccordées sur une longueur suffisante et encore dans la chambre amont à des raccords électriquement conducteurs (20) pour le fluide de refroidissement, de manière à éviter des claquages électriques, et que les raccords de refroidissement sont raccordés à la masse et ressortent de la chambre amont.

9. Laser à gaz suivant la revendication 8, caractérisé par le fait que la chambre amont possède une paroi métallique (21), que les raccords (20) pour le fluide de refroidissement sont formés par des tubes métalliques, traversent la paroi métallique et sont fixés à cette dernière par brasage ou soudage.

10. Laser à gaz suivant l'une des revendications 1 à 9, caractérisé par le fait que la chambre du laser est limitée de tous côtés par des parois métalliques et possède une paroi avant (4), dans laquelle est disposé au moins un évidement (5), qu'au moins un tube métallique de traversée (6) possédant un diamètre intérieur supérieur à celui des canalisations pour le fluide de refroidissement est inséré dans cet évidement, que ce tube de traversée pénètre dans la chambre amont et y est fermé d'une manière étanche au vide par un disque céramique (7) que traverse une canalisation d'amenée du fluide de refroidissement et/ou une canalisation d'évacuation du fluide de refroidissement (8,10), et que le disque céramique est agencé sous la forme d'un isolant pour la tension à haute fréquence prévue.

11. Laser à gaz suivant la revendication 10, caractérisé par le fait que la canalisation d'amenée du fluide de refroidissement et la canalisation d'évacuation du fluide de refroidissement, qui sont soumises à une haute fréquence sont formées, au moins dans la zone du disque céramique, par un tube métallique à paroi mince et sont raccordées, d'une manière électriquement conductrice dans la chambre amont, à proximité du disque céramique, et par l'intermédiaire d'un dispositif de serrage (16), à une ligne d'alimentation pour la haute fréquence, que le dispositif de serrage supporte la ligne d'alimentation pour la haute fréquence et que la ligne d'alimentation pour la haute fréquence aboutit à une unité d'adaptation de l'impédance.

12. Laser à gaz suivant la revendication 6, caractérisé par le fait que l'unité d'adaptation est séparée par une paroi métallique (22) du reste de la chambre amont et que les raccords pour le fluide de refroidissement traversent cette paroi métallique, d'une manière étanche à la haute fréquence.

13. Laser à gaz suivant l'une des revendications 1 à 12, caractérisé par le fait que le laser est un laser à guide d'ondes en forme de plaque comportant un résonateur optique instable.
